**Europäisches Patentamt**

**European Patent Office**

**Office européen des brevets**

(11) Publication number: **0 335 242 B1**

(12) **EUROPEAN PATENT SPECIFICATION**

(45) Date of publication of patent specification: **19.01.94**   (51) Int. Cl.⁵: **A23K 3/03**

(21) Application number: **89105107.0**

(22) Date of filing: **22.03.89**

(54) **Process and preservative for fodder preservation.**

(30) Priority: **30.03.88 FI 881514**

(43) Date of publication of application:
**04.10.89 Bulletin 89/40**

(45) Publication of the grant of the patent:
**19.01.94 Bulletin 94/03**

(84) Designated Contracting States:
**AT BE CH DE FR GB IT LI LU NL SE**

(56) References cited:
**EP-A- 0 028 535**
**WO-A-82/01902**
**WO-A-86/05529**
**GB-A- 1 587 518**

(73) Proprietor: **VALIO MEIJERIEN KESKUSOSUUSLIKE**
**Meijeritie 2 - 6**
**SF-00370 Helsinki(FI)**

(72) Inventor: **Heikonen, Matti**
**Ylisrinne 10 B 3**
**SF-02210 Espoo(FI)**
Inventor: **Setälä, Jouko**
**Kalliotie 9 C**
**SF-00760 Helsinki(FI)**
Inventor: **Moisio, Tauno**

**Työmiehenkatu 2 A**
**SF-00180 Helsinki(FI)**
Inventor: **Sundquist,Jorma**
**Laurinlahdentie 12 D**
**SF-02320 Espoo(FI)**
Inventor: **Laamanen, Lauri**
**Ulvilantie 23 D 42**
**SF-00350 Helsinki(FI)**
Inventor: **Poppius, Kristiina**
**Otavantie 7 B 25**
**SF-00200 Helsinki(FI)**
Inventor: **Kauliomäki, Seppo**
**Sepetlahdentie 10 A 14**
**SF-02240 Espoo(FI)**
Inventor: **Hortling, Bo**
**Pajalahdentie 9 C 45**
**SF-00200 Helsinki(FI)**

(74) Representative: **Lemcke, Rupert, Dipl.-Ing. et al**
**Patentanwälte Dipl.-Ing. R. Lemcke**
**Dr.-Ing. H.J. Brommer,**
**Postfach 40 26**
**D-76025 Karlsruhe (DE)**

**Description**

The present invention relates to a process in accordance with the preamble of claim 1 for the preservation of fodder of vegetable or animal origin.

According to such a process, acid-containing substance is added to fresh fodder in an amount sufficient to decrease the initial pH of the fodder.

The invention further concerns a preservative according to the preamble of claim 6.

By means of fodder preservation experiments carried out in the late 1920's, A. I. Virtanen and his coworkers were able to show that microbial protein decomposition and butyric acid fermentation are inhibited at pH below 4. Lactic acid fermentation and the process of respiration are also greatly decreased.

From these experimental results the problem how to preserve fresh animal feed was solved in the simple manner indicated in the first claim of FI Patent Specification No. 15527: "Acids or acidic salts or mixtures thereof are added to fresh, newly harvested fodder, when putting said fodder into silos, in an amount sufficient immediately to decrease the initial fodder pH to between 3 and 4." The added acids control fermentation and many detrimental phenomena related thereto. Initial respiration losses are also diminished.

It is well-known that acids formed during fermentation of sugars present in vegetative material can cause the fodder pH to drop below 4. This decrease in pH is nature's own way of defending itself; the organogenic material seeks to prevent stronger mechanisms of destruction, such as decay. In the above-mentioned fodder preservation process, the right acidity is achieved by adding acids, which protects the sugars, proteins and other valuable minerals from fermentation. Carbohydrates that are easily soluable can thus be saved for later use in the ruminants own digestion system.

In the presented ensiling process, which is called the AIV System after its inventor, mineral acids were being used for many years of economic reasons. The benefits related to the use of organic acids were well-known from the very beginning, but it was only in the 1960's that the use of formic acid in AIV solutions could be started. At present, the most widely used AIV solution in our country, which is marketed under the trade name AIV II, mainly contains formic acid (80 per cent formic acid and 2 per cent ortho-phosphoric acid). By using said solution, the fodder pH can easily be adjusted to a value between 3.5 and 4, which is the most suitable range in terms of fodder edibility.

In an article titled "Puumelassi tuoreviljan säilöntäaineena" ("Wood molasses as preservative for fresh crop") [Maataloustieteellinen Aikakauskirja 50 (1978) 206-211], Maija-Liisa Salo has suggested that fresh crop be ensiled by means of spent liquor from sulphite pulping from which a part of the lignosulphonates have been removed. The so-called wood molasses solution used in the ensiling tests comprises a solution concentrated to a dry matter content of about 55 %. Two thirds of the lignosulponates had been removed from the solution. Since the pH of the solution was about 2, rather large amounts of solution had to be used for increasing the acidity of the fodder to below pH 4.

The sugars contained in the liquor were found to assist the anaerobic ensiling process.

There are, however, some drawbacks related to the process. Thus, mildew is easily formed on the surface of the silage in warm silos. The lignosulphonates further impair the edibility of the products, the taste and smell of these compounds have even been found to be offensive to the animals. Therefore, a part of them must always be removed.

The FI Patent Specification No. 60809 also deals with the use of spent liquor from pulping for ensiling. According to said publication, the spent liquor from sulphite or bisulphite pulping is concentrated to a dry matter content of between 30 and 70 per cent, whereupon it is combined with an acid that promotes the process of ensiling. The amount of the acid is between 20 and 80 wt-%.

From the publication it appears that preferable results are achieved, for instance, by means of a solution containing 40 % sulphite spent liquor, 30% hydrochloric acid and 30 % formic acid. In contrast, sulphite spent liquor does not in itself result in good silages. This is demonstrated by the analysis results which indicate that the fodder has a high content of butyric acid. Similarly the amount of nitrogen in the form of ammonia is high, whereas the sugar content of the silage is low. In the patent specification it is, in fact, mentioned that "it has turned out to be necessary to use acids, because even though the proteins can be satisfactorily preserved by means of pure spent liquor, the other ensiling processes do not take place accurately at a sufficiently high rate without the use of enough acid (cf. page 5, lines 6 to 10).

There are also other examples to be found in the literature concerning the use of pulping waste liquors in fodder preservation

From the first stage of a two-stage dissolving pulp cook carried out in acidic media a hydrolysate is obtained which contains 20 to 30 per cent of the dry matter of wood in a solution whose concentration is 5 to 7 per cent. According to FI Patent Specification No. 66281 a feed preservative can be prepared from said hydrolysate. The hydrolysate is partially neutralised with magnesium and sodium compounds, it is evaporated to a dry matter content amounting to about 55 to 65 per cent and the rest is neutralised with calcium compounds. If desired, about 2 to 3 per cent formic acid or 2 to 5 per cent hydrochloric acid may be added.

The preservative according to FI Patent Specification No. 72034 is prepared by hydrolysing the lignocellulosic raw material and dividing the hydrolysate into two components, the component containing dissolved substances being concentrated by, for instance, evaporation and the component containing insoluable substances being dried to air dryness. These two components are used during the fodder preservation and the harvesting stages.

Neither of these two processes utilises the basic idea of the AIV System, which comprises reducing the initial pH of fodder by means of added acids. Instead, the processes are based on the preservation effect created by the organic acids formed in connection with the fermentation processes of the fodders. However, the fermentation may impair the value of the fodder, for instance by decomposing proteins and causing deamination and decarboxylation reactions.

FI Patent Specification No. 68949 discloses a mixture which is intended to be used as a fodder additive in the form of an aqueous solution containing sulphite spent liquor and lignosulphonates (5 to 15 weight per cent), formaldehyde (9 to 25 weight per cent) and organic acid(s) (30 to 60 weight per cent). Preferable acids are, for instance, mixtures of acetic acid and butyric acid or acetic acid and propionic acid.

Formaldehyde decreases protein decomposition. However, it has been claimed to impeded the further processing of dairy farming products, for instance the preparation of cheese.

In summary it can be noted that the prior art does not comprise any useful process for fodder preservation by using only spent liquor from a pulping process. The problems related to the use of spent liquor are caused by its too high pH and by the reaction products of lignin present in the spent liquor. The high content of said reaction products impairs the edibility of the fodder. Nor can the sulphur present in the spent liquors be considered beneficial for ruminants, in particular if it is present in large amounts.

The main object of the present invention is to offset the drawbacks associated with the prior art and to provide a novel process and preservative for fodder preservation.

The FI Patent Specification 74750 teaches a process for preparing bleached pulp from lignocellulosic raw material, wherein the chips are defibered by means of peroxyformic acid and the defibered pulp is bleached with an alkaline peroxide solution. The cooking stage of said process can be conducted in one step, as a pure peroxyacid cook but, alternatively, also in two or three steps. In the two-stage cook, the chips are first treated in pure formic acid, the spent liquor is separated by filtering and the precooked chips are heated in a second stage in a mixture of formic acid and hydrogen peroxide. In the three-stage cook, the chips are first heated in a mixture of formic acid and hydrogen peroxide. The spent liquor is separated and formic acid is then added to the chips, which are cooked in boiling formic acid. Upon separation of the spent liquor from this second stage, a further formic acid and hydrogen peroxide treatment is carried out.

Pulping processes similar to the cooking stages mentioned in the above FI Patent Specification have been presented in other publications, as well. Thus, the SU Patent Specifications Nos. 761647, 821614 and 829747 disclose the use of mixtures of hydrogen peroxide and lower carboxylic acids for delignification of wood.

The spent liquor from peroxyformic acid cooks can be analysed by, for instance, the following two methods:

a) The substance which is considered to be lignin is precipitated from the spent liquor by adding water and the precipitate is separated from the supernatant by filtering. When the water-formic acid filtrate is evaporated, the carbohydrates are left.

b) The spent liquor is evaporated. The residue is dissolved in water, the lignin remaining undissolved and only the carbohydrates and lignin fragments are dissolved.

The carbohydrates and lignin fragments can further be divided into the following fractions: Polysaccharides (the matter which is non-soluble in acetone), oligo- and monosaccharides (acetone-soluble but non-soluble in ether) and monosaccharides and lignin fragments (acetone- and ether-soluble matter).

The combined spent liquors of the multistage cooks (comprising 2 or 3 stages) according to FI Patent Specification No. 74750 have been discovered to contain on an avarage about 30 to 50 weight per cent lignin, about 5 to 20 weight per cent polysaccharides, about 10 to 20 weight per cent mono- and oligosaccharides and about 30 to 50 weight per cent monosaccharides and lignin fragments calculated on basis of the dry matter. The dry matter content is about 1 to 15 weight per cent.

Within the scope of this application, dry matter means the evaporation residue of the solution (or liquor).

With reference to the above description, the invention is based on the idea of using as an animal fodder preservative the spent liquor of a pulping process, in which the cellulosic raw material has been defibered by formic acid and/or a mixture of formic acid and hydrogen peroxide.

More specifically, the process according to the present invention is characterised by what is stated in the characterising part of claim 1.

The preservative according to the invention is, in its turn, characterised by what is stated in the characterising part of claim 5.

As far as its dry matter content is concerned, the preservative according to the invention can be concentrated by removing, e.g. by evaporation, volatile compounds, such as formic acid and water. Lignin and its reaction products are preferably not removed from the spent liquor before it is used, the ratio of the wood-derived mono-, oligo- and polysaccharides to lignin and the reaction products of lignin remaining at least essentially the same as it is in the spent liquor obtained from cooking. The dry matter content of the concentrated spent liquor may vary within a large range. Preferably, the spent liquor is concentrated to a dry matter content of about 1 to 40 per cent, preferably 1 to 20 per cent, by removing at least about 25 %, preferably about 50 % of the volatile substances, mainly formic acid and water. The solution of the concentrated spent liquor contains at least 60 weight per cent, preferably at least 70 weight per cent and more preferably at least 80 weight per cent formic acid and/or peroxyformic acid.

However, as shown in working example 2, it is not necessary to concentrate the spent liquor in accordance with the invention provided the dry matter content and the formic acid concentration of the spent liquor withdrawn from pulping correspond to the above ranges.

Preferably, the preservative according to the invention comprises the spent liquor from a two- or three-stage formic acid cook, hydrogen peroxide having been used in at least one of the cooking stages. Such a preservative can, in addition to the spent liquor, also contain formic acid used in pulp washing, i.e. so-called washing acid, and even water used for the same purpose.

There are significant benefits related to the invention. Thus, concentrated or even untreated spent liquor can be used as a preservative. The pH of the silage can easily be adjusted to its most preferred range (3.5 - 4.0), while the sugars in the spent liquors provide for a sufficient sugar content and give rise to an accurate fermentation of the feed.

As mentioned above, the reaction products of lignin need not be removed. In contrast to the lignosulphonates, the lignin reaction products present in the spent liquor from peroxyformic acid cooks do not appear in any way to impair the edibility of the fodder. Although we do not yet fully understand all the underlying reasons, it is obvious that the lignin in the spent liquors from formic acid and peroxyformic acid cooks is in a more suitable form as far as the ruminants are concerned. Since it is non-sulphorous, it appears to correspond better than the lignosulphonates to the native lignin in the plants.

The lack of sulphur in the preservative represents a benefit as regards the edibility of the ensiled fodder. Many of the sulphur compounds are believed to affect the taste of milk.

In the following, the invention will be examined in more detail by means of two working examples.

EXAMPLE 1:

A. Pulping:

Birch chips were cooked on laboratory scale in two and three stages. In the first stage of the two-stage cook, the chips (3 kg) were cooked in pure formic acid (techn. quality, 17.5 l). After the cooking, the spent liquor was separated by filtering. In the second stage, the precooked chips were heated in a mixture of formic acid (17.5 l) and hydrogen peroxide (50 %, 300 ml) at 80 °C.

Birch chips (500 g) were cooked in a three-stage pulping process. In the first stage, the birch chips were heated in a mixture of formic acid (techn. quality, 2000 ml) and hydrogen peroxide (50 %, 10 ml) at 80 °C. The spent liquor was separated by filtering. In the second stage, 2000 ml of formic acid were added to the chips and the chips were cooked in boiling formic acid. The spent liquor was removed and, in the third stage, the defibered chips were again heated in a mixture of 2000 ml formic acid and 10 ml of 50 % hydrogen peroxide at 80 °C.

Pine was pulped according to similar processes.

The pulps from birch and pine cooks were washed with acid and thereafter with water. The washing acids and the spent liquors of the different stages of the cooks were combined. The dry matter content of the combined spent liquor thus obtained was only about 1 %, whereas the dry matter content of the spent liquors obtained from the cooks was about 7 %.

The sugars and lignin of the combined spent liquor were determined according to fractioning alternative a described in the introductory part of the description. The carbohydrates were hydrolysed to monosaccharides, which were determined by gas chromatography (Method No. 27:76 of the Finnish Pulp and Paper Research Institute).

The composition of the spent liquor is given in table 1.

Table 1

| Composition of the combined spent liquor of two- and three-stage peroxyformic acid cooks | |
|---|---|
| Components | g/kg spent liquor |
| Lignin | 3.66 |
| Polysaccharides | 1.38 |
| Oligo-, monosaccharides Lignin fragments | 5.30 |

Table 2 shows the monosaccharide composition of the spent liquor.

Table 2

| Monosaccharide contents of the different components of the combined spent liquors of two-stage and three-stage peroxyformic acid cooks | | | | | | | | |
|---|---|---|---|---|---|---|---|---|
| | Ra % | Ar % | Xy % | Ma % | Ga % | Glu % | Tot.sug. % | Lign % |
| Polysacch. | 0.4 | 1.1 | 3.4 | 47.0 | 11.0 | 37.1 | 43.3 | 0.2 |
| Oligo-, monosacch., lign.frag. | 0.7 | 7.0 | 42.3 | 31.5 | 8.2 | 10.3 | 46.4 | 4.4 |
| Lignin | - | 2.2 | 15.7 | 16.1 | 21.0 | 45.0 | 1.3 | 82.1 |
| Ra = Rhamnose, Ar = Arabinose, Xy = Xylose, Ma = Mannose, Ga = Galactose, Glu = Glycose | | | | | | | | |

B. Concentration of the spent liquor:

The above spent liquor was divided into two parts. About 25 % of the formic acid was removed from one part and about 50 % from the other part. The concentration was carried out by evaporation at a pressure of 0.1 bar. Of the formic acid, 25 % distilled as a mixture of formic acid and water within one hour, the destillation range being 50° to 59°C. Half of the formic acid again distilled at a distillation range of between 50° and 61°C within about 4 hours. After evaporation, the dry matter contents of the spent liquors amounted to about 1.5 % and 2 %, respectively. The formic acid concentrations were 87 % and 83 %, respectively.

C. Preparation of silages:

The fodders were ensiled in 500 kilo silos by harvesting the grass with a flail harvester and by adding preservative (5 litres/1000 kg) during cutting. The fodder was packed in the silos by trampling, it was hermetically covered with a plastic film, and put under a pressure of 260 kg/m$^2$ by water weights. The fodders were kept in the silos for 3 months, the silos were opened and the 500 kilo silages were sampled and analyzed.

The compositions of the silages were as follows:

**Table 3. Composition of the silages**

|  | Test liquor 50 | Test liquor 25 | Formic acid |
|---|---|---|---|
| Dry matter % | 19.1 | 18.0 | 17.9 |
| Percentual composition of the dry matter |  |  |  |
| − Organic matter | 91.5 | 91.6 | 91.7 |
| − Crude protein | 17.8 | 16.9 | 16.1 |
| − Crude fibres | 30.0 | 30.8 | 30.9 |
| − Sugars | 3.6 | 1.4 | 3.9 |
| − Lactic acid | 2.3 | 3.5 | 3.4 |
| − Acetic acid | 1.0 | 1.1 | 1.6 |
| − Butyric acid | 0.0 | 0.0 | 0.3 |
| pH | 3.93 | 3.99 | 4.30 |
| $NH_3$.g/l | 0.21 | 0.19 | 0.38 |

Test liquor 50: Spent pulping liquor, from which 50 % of the solution had been removed by distillation, formic acid concentration: 83 weight per cent

Test liquor 25: Spent pulping liquor, from which 25 % of the solution had been removed by distillation, formic acid concentration: 87 weight per cent

Formic acid: Concentration: 90 weight per cent

According to the dosage principle used, different amounts of formic acid were added to the silages. Most formic acid was added to fodder that was ensiled with formic acid only.

When comparing the quality of the silages according to pH, $NH_3$ and the amounts and ratios of fermentation acids, it can be noted that the experimental silages are of good quality. The typical criteria for good quality silages are the following: pH 3.9 - 4.0, $NH_3$ less that 0.5 g/l, acetic acid less that 2.5 % of dry matter, butyric acid less than 0.5 % of dry matter (less than 0.1 % of the fresh material) and lactic acid less than 10 % of dry matter. As far as the experimental liquors are concerned, it is extremely positive to notice that the silage qualities were even better than was the quality of the formic acid silage. Formic acid is commonly used as control liquor in silage tests, the tested preservative being considered good if even the same results are obtained as for formic acid.

It is very likely that the compounds formed during peroxy-acid cooking partly assist in generating the good results of the experimental silages. Oxidising compounds, such as nitrates and nitrites, are known to have a similar effect on the fermentation of silage. However, due to other reasons, it is not desirable to use these compounds in silages.

Of the experimental liquors, "test liquor 50" is slightly better, because the silage contained more sugar after ensiling. This is explained by the fodder's not only being less fermented (less fermentation acids) but also by the fact that the test liquor 50 contained more sugars than did test liquor 25.

EXAMPLE 2:

In a second test series, more uniform spent liquors from a three-stage peroxyformic/formic acid delignification of birch were collected for preservation tests. The pulping was carried out as described in example 1. No washing acids were added to the liquors, nor were the liquors concentrated. The formic acid concentration in the combined test solution was 82 wt-%. The dry matter content of the liquor was 3.1 per cent, the lignin content 1.0 per cent and the carbohydrate content 2.0 per cent. The main sugar in solution was xylose (average 80 % of the total sugars).

Direct-cut timothy grass was harvested using a flail harvester as described in example 1. The additives were added in the grass at the rate of 5 litre/ton grass during the cutting in the harvester. The silages were made in tower silos, the ensiled amount being about 25,000 kg/treatment. The silages were sampled about 120 days after ensiling and analysed for quality estimation according to MOISIO & HEIKONEN 1989 (Anim. Feed Sci. Technol., in press). The results are presented in table 4.

Table 4

| Chemical composition of the silages | | |
|---|---|---|
| | Test liquor | AIV II solution |
| Dry matter, % | 21.7 | 23.0 |
| Crude protein, g/kg | 29.5 | 32.6 |
| Crude fibres, g/kg | 63.3 | 70.6 |
| Lactic acid, g/kg | 6 | 12 |
| Acetic acid, g/kg | 2 | 2 |
| Sugars, g/kg | 34 | 7 |
| pH | 4.1 | 3.8 |
| soluble N, % of total N | 32 | 41 |
| $NH_3$ + amines, % of total N | 7 | 13 |
| Test liquor: Spent pulping liquor containing 82 % formic acid | | |
| AIV II: 80 % formic acid + 2 % orthophosphoric acid | | |

Apparently, the experimental silage of example 2 was of good quality when evaluated according to the criteria mentioned in connection with example 1.

The results were confirmed on a commercial farm. The silages made with the test liquor was equivalent in terms of quality and edibility to the silage made with formic acid (AIV II solution). No clear changes in milk yield or composition were found when the silages were fed to lactating dairy cows.

Several different embodiments are possible within the scope of the invention. Thus, in addition to the spent liquors described, spent liquors of other formic acid and peroxyformic acid cooks can be used as preservatives. In this context, reference is made, by way of an example, to the spent liquors of the cooks according to the SU Patent Specifications mentioned in the introductory part of the description.

It should further be noticed that the process and the preservative according to the invention can be used for the preparation and preservation of many different kinds of animal fodders and feedingstuffs of vegetable as well as of animal origin. Thus, in addition to grass, the vegetable starting materials may for instance comprise hay, maize, grains, seed crops and manioc. The invention can also be used for preparing silage of animal origin, such as fish silage, e.g. from herring, and for the preserving slaughtering and poultry offal.

**Claims**

1. A process for the preservation of animal fodder, wherein
   - acid-containing substance is added to the fodder in an amount sufficient to decrease the initial pH of the fodder,
   
   the acid-containing substance used comprising spent liquor from acid pulping of cellulose optionally concentrated to a suitable concentration,
   **characterised** by
   - using the spent liquor of a cook, wherein the defibering of the cellulosic raw material has been accomplished by formic acid and/or a mixture of formic acid and hydrogen peroxide.

2. The process as claimed in claim 1 for preserving grass or equivalent vegetable matter, **characterised** by decreasing the initial pH of the fresh, newly harvested fodder to 4.5 or less, preferably to below 4.

3. The process as claimed in claim 1 or 2, **characterised** by using a spent liquor, whose dry matter content has been increased by removing only volatile components, the ratio of the wood-derived mono- , oligo- and polysaccharides to lignin and the reaction products of lignin remaining the same as it was in the spent liquor obtained from cooking.

4. The process as claimed in any of claims 1 to 3, **characterised** by using spent liquor, which has been concentrated by evaporation to a dry matter content of 1 to 40 per cent, preferably 1 to 20 per cent.

5. The process as claimed in claim 4, **characterised** by using a spent pulping liquor, which has been concentrated by removing at least 25 %, preferably 50 % of the formic acid.

6. Acid preservative for animal fodder comprising formic acid as acid component, **characterised** in that it comprises essentially the spent liquor of a cook, wherein the defibering to the cellulosic raw material has been accomplished by using formic acid and/or a mixture of formic acid and hydrogen peroxide, said spent liquor having a concentration of at least 60 per cent formic acid and/or peroxyformic acid

7. The preservative according to claim 6, **character ised** in that it comprises the spent liquor of a two-stage or a three-stage formic acid cook, wherein at least one of the cooking stages comprises the use of hydrogen peroxide.

8. The preservative according to claims 6 or 7, **characterised** in that it contains besides spent liquor also formic acid used for washing the defibered pulp.

9. The preservative according to any one of claims 6 to 8, **characterised** in that it contains before concentration 30 to 50 weigth per cent lignin, 5 to 20 weight per cent polysaccharides, 10 to 20 weight per cent mono- and polysaccharides and 30 to 50 weight per cent monosaccharides and lignin fragments calculated on basis of the dry matter.

10. The preservative according to any one of claims 6 to 9, **characterised** in that it has been concentrated by evaporation, containing after concentration at least 70 per cent, preferably at least 80 % formic acid and/or peroxyformic acid.

**Patentansprüche**

1. Verfahren zur Konservierung von Tierfutter, wobei Säure enthaltende Substanz in einer Menge dem Futter zugesetzt wird, die ausreichend ist, um den ursprünglichen pH-Wert des Futters zu senken, wobei die benutzte, Säure enthaltende Substanz verbrauchte Flüssigkeit aus einer Säurezerfaserung von Zellulose enthält, die gegebenenfalls auf eine brauchbare Konzentration konzentriert wird, dadurch gekennzeichnet, daß die verbrauchte Flüssigkeit eines Aufschließers verwandt wird, in dem die Auffaserung des zellulösen Rohmaterials durch Formylsäure und/oder eine Mischung von Formylsäure und Wasserstoffperoxyd erreicht wurde.

2. Verfahren gemäß Anspruch 1 zur Konservierung von Gras oder ähnlichem Pflanzenmaterial,
dadurch gekennzeichnet,
daß der anfängliche pH-Wert des frischen, neu geernteten Futters auf 4,5 oder niedriger, bevorzugterweise unter 4 abgesenkt wird.

3. Verfahren gemäß Anspruch 1 oder 2,
dadurch gekennzeichnet,
daß verbrauchte Flüssigkeit verwandt wird, deren Trockenmassenanteil erhöht wurde, indem nur die flüchtigen Anteile entfernt wurden, wobei das Verhältnis der von Holz stammenden Mono-, Oligo- und Polysacharide zu Lignin das gleiche bleibt wie in der verbrauchten Flüssigkeit, die vom Kochen erhalten wird.

4. Verfahren gemäß einem der Ansprüche 1 bis 3,
dadurch gekennzeichnet,
daß verbrauchte Flüssigkeit verwandt wird, die durch Evaporation konzentriert wurde auf einen Trockenmassenanteil von 1 % bis 40 %, vorzugsweise 1 % bis 20 %.

5. Verfahren gemäß Anspruch 4,
dadurch gekennzeichnet,
daß eine verbrauchte Zerfaserungsflüssigkeit verwandt wird, die konzentriert wurde durch Entfernung von wenigstens 25 %, vorzugsweise 50 % der Formylsäure.

6. Säure-Konservierungsmittel für Tierfutter, das Formylsäure als Säurekomponente enthält,
dadurch gekennzeichnet,
daß es im wesentlichen die verbrauchte Flüssigkeit eines Aufschließers enthält, in dem die Zerfaserung des zellulösen Rohmaterials erreicht wurde, durch die Benutzung von Formylsäure und/oder einer Mischung von Formylsäure und Wasserstoffperoxyd, wobei die besagte verbrauchte Flüssigkeit eine Konzentration von wenigstens 60 % Formylsäure und/oder Peroxydformylsäure hat.

7. Konservierungsmittel gemäß Anspruch 6,
dadurch gekennzeichnet,
daß es die verbrauchte Flüssigkeit eines zweistufigen oder dreistufigen Formylsäure-Aufschließers enthält, bei dem wenigstens eine der Aufschließstufen die Benutzung von Wasserstoffperoxyd umfaßt.

8. Konservierungsmittel gemäß den Ansprüchen 6 oder 7,
dadurch gekennzeichnet, daß es neben der verbrauchten Flüssigkeit ebenfalls Formylsäure enthält, die zum Waschen der zerfaserten Pulpe benutzt wurde.

9. Konservierungsmittel gemäß einem der Ansprüche 6 bis 8,
dadurch gekennzeichnet,
daß es vor der Konzentration 30 bis 50 Gewichtsprozent Lignin, 5 bis 20 Gewichtsprozent Polysacharide, 10 bis 20 Gewichtsprozent Mono- und Polysaccharide und 30 bis 50 Gewichtsprozent Monosaccharide und Ligninfragmente enthält, berechnet auf der Basis der Trockenmasse.

10. Konservierungsmittel gemäß einem der Ansprüche 6 bis 9,
dadurch gekennzeichnet,
daß es durch Evaporation konzentriert wurde und daß es nach der Konzentration wenigstens 70 %, bevorzugterweise wenigstens 80 % Formylsäure und/oder Peroxydformylsäure enthält.

**Revendications**

1. Procédé pour la préservation de fourrage pour animaux, dans lequel une substance contenant un acide est ajoutée au fourrage en une quantité suffisante pour diminuer le pH initial du fourrage, la substance contenant un acide utilisée comprenant une liqueur usée provenant de la réduction en pulpe de cellulose par un acide, éventuellement concentrée à une concentration convenable, caractérisé par l'utilisation de la liqueur usée d'une cuisson, dans laquelle le défibrage du matériau brut cellulosique a été accompli avec l'acide formique et/ou un mélange d'acide formique et de peroxyde d'hydrogène.

**2.** Procédé suivant la revendication 1 pour la préservation d'herbes ou de matière végétale équivalente, caractérisé par la diminution du pH initial du fourrage frais récemment récolté à une valeur de 4,5 ou moins, de préférence à une valeur inférieure à 4.

**3.** Procédé suivant la revendication 1 ou 2, caractérisé par l'utilisation d'une liqueur usée dont la teneur en matières sèches a été augmentée par élimination des composants volatils seulement, le rapport des mono-, oligo- et polysaccharides dérivés du bois à la lignine et aux produits réactionnels de la lignine restant le même que dans la liqueur usée provenant d'une cuisson.

**4.** Procédé suivant l'une quelconque des revendications 1 à 3, caractérisé par l'utilisation d'une liqueur usée qui a été concentrée par évaporation à une teneur en matières sèches de 1 à 40%, de préférence de 1 à 20%.

**5.** Procédé suivant la revendication 4, caractérisé par l'utilisation d'une liqueur usée de réduction en pulpe, qui a été concentrée par élimination d'au moins 25%, de préférence 50% de l'acide formique.

**6.** Conservateur acide pour fourrage pour animaux comprenant de l'acide formique comme composant acide, caractérisé en ce qu'il comprend essentiellement la liqueur usée d'une cuisson, dans laquelle le défibrage du matériau brut cellulosique a été accompli par utilisation d'acide formique et/ou d'un mélange d'acide formique et de peroxyde d'hydrogène, cette liqueur usée ayant une concentration d'au moins 60% d'acide formique et/ou d'acide peroxyformique.

**7.** Conservateur suivant la revendication 6, caractérisé en ce qu'il comprend la liqueur usée provenant d'une cuisson à l'acide formique à deux étages ou à trois étages, dans laquelle l'un au moins des étages de cuisson comprend l'utilisation de peroxyde d'hydrogène.

**8.** Conservateur suivant la revendication 6 ou 7, caractérisé en ce qu'il contient en plus de la liqueur usée, également de l'acide formique utilisé pour le lavage de la pulpe défibrée.

**9.** Conservateur suivant l'une quelconque des revendications 6 à 8, caractérisé en ce qu'il contient avant concentration, 30 à 50% en poids de lignine, 5 à 20% en poids de polysaccharides, 10 à 20% en poids de mono- et polysaccharides et 30 à 50% en poids de monosaccharides et de fragments de lignine calculés en matières sèches.

**10.** Conservateur suivant l'une quelconque des revendications 6 à 9, caractérisé en ce qu'il a été concentré par évaporation, contenant après concentration au moins 70%, de préférence au moins 80% d'acide formique et/ou d'acide peroxyformique.